**Europäisches Patentamt**

(19) **European Patent Office**

**Office européen des brevets**

(11) Veröffentlichungsnummer: **0 163 292**

**B1**

(12) # EUROPÄISCHE PATENTSCHRIFT

(45) Veröffentlichungstag der Patentschrift:
**12.10.88**

(51) Int. Cl.⁴: **E 02 B 7/22**

(21) Anmeldenummer: **85106555.7**

(22) Anmeldetag: **29.05.85**

(54) **Absperreinrichtung für den Hochwasserschutz.**

(30) Priorität: **01.06.84 DE 3420405**

(43) Veröffentlichungstag der Anmeldung:
**04.12.85 Patentblatt 85/49**

(45) Bekanntmachung des Hinweises auf die Patenterteilung:
**12.10.88 Patentblatt 88/41**

(84) Benannte Vertragsstaaten:
**AT BE CH DE FR GB IT LI LU NL SE**

(56) Entgegenhaltungen:
**FR-A-1 301 440**
**US-A-4 165 882**
**US-A-4 428 174**
**US-A-4 439 061**

(73) Patentinhaber: **Kossbiel, Ernst, Am Schloss Nr. 4,
D-6780 Pirmasens (DE)**

(72) Erfinder: **Kossbiel, Ernst, Am Schloss Nr. 4, D-6780
Pirmasens (DE)**

(74) Vertreter: **Fischer, Wolf- Dieter, Dipl.- Ing.,
Patentanwälte Dipl.- Ing. A.H. Fischer Dipl.- Ing.
W.D. Fischer Kurfürstenstrasse 32, D-6700
Ludwigshafen/Rhein (DE)**

**Beschreibung**

Die Erfindung betrifft eine Absperreinrichtung für den Hochwasserschutz und zur Abdichtung von Kanälen mit als Hohlprofil ausgebildeten Absperrbalken, die an den Berührungsflächen eine Nut-Feder-Verbindung aufweisen und wobei die übereinander angeordneten Balken gegeneinander mit Hilfe von Spannbolzen verspannt und abgedichtet sind.

Solche Absperreinrichtungen sind bekannt und sind mit erheblichen Nachteilen behaftet. Diese Nachteile bestehen in der aufwendigen Montage und damit auch gegebenen Demontage und es läßt sich vor allen Dingen keine Dichtigkeit in vertikaler und horizontaler Richtung erzielen. Weiterhin besitzen diese Einrichtungen den Nachteil, daß sie nicht in mobiler Form über Straßen und Plätze geführt und an vorhandene Bauteile angeschlossen werden können. In hochwasserfreien Zeiten müssen demnach Behinderungen in Kauf genommen werden.

Der Erfindung liegt die Aufgabe zugrunde, eine Absperreinrichtung der eingangs genannten Art so auszubilden, daß bei einfacher Montage- und Demontagemöglichkeit eine Dichtigkeit in Vertikal- und Horizontalrichtung gewährleistet ist.

Diese Aufgabe wird nach der Erfindung dadurch gelöst, daß die hohl ausgebildeten Seitenteile auf der Nutseite an ihrer Anschlußseite einen durchgehenden Schlitz aufweisen, in den jeweils ein Dichtungsstreifen eingeschoben ist, und daß zum Verbinden der übereinander angeordneten Balken am Fundament abgedichtete Steckpfosten vorgesehen sind, die vertikal eine U-förmige Öffnung aufweisen, in die die Balken eingeschoben sind, wobei innerhalb der Öffnung gegenüber der Wasserdruckseite vertikal verlaufende Dichtungsbänder vorgesehen sind.

Es ist vorteilhaft, daß die Steckpfosten in einem Köcher angeordnet sind und mit einem befestigten Winkel am Köcherrand aufsitzen, wobei zwischen dem Winkel und dem Köcherrand ein Dichtungsband angebracht ist.

Es wird vorgeschlagen, daß Anschlußprofile für Gebäude oder Mauern vorgesehen sind, die mit Dichtungsbändern versehen sind.

Eine vorteilhafte Ausführungsform besteht darin, daß die U-förmige Öffnung am Steckpfosten durch einen daran angebrachten festen Winkel und einen beweglichen Andruckwinkel gebildet ist, wobei der Andruckwinkel in einer schräg nach unten gegen die Dichtung laufenden Führung gehaltert ist.

Eine vorteilhafte Ausführungsform besteht darin, daß der Steckpfosten mit Hilfe eines Spannbolzens am Köcher befestigt ist.

Weiterhin ist es vorteilhaft, daß am Köcherfuß Arretierbolzen für den Spannbolzen vorgesehen sind.

Es wird weiterhin vorgeschlagen, daß das Federelement zwei seitliche Führungsschienen aufweist, wobei im Bodenteil Montageöffnungen für ein Hebewerkzeug vorgesehen sind.

Es ist vorteilhaft, daß in der Bodenschiene Halterungen für das Ende des Spannbolzens vorgesehen sind.

Die vom Hochwasser bedrohten Gebiete sind bekannt, wobei dies auch für die Abdichtung von Kanälen gilt, so daß die entsprechenden Schutzlinien vorher festgelegt werden können. Es lassen sich daher vorher entsprechende Fundamente vorbereiten und die Absperreinrichtung läßt sich dann sehr schnell und mit einfachen Mitteln einbauen. Ein weiterer wesentlicher Vorteil besteht darin, daß eine gute Dichtigkeit auch bei höherem Wasserdruck gewährleistet ist. Schließlich ergibt sich der Vorteil einer fast unbegrenzten Beständigkeit und immer wieder Verwendbarkeit. Weitere Vorteile bestehen darin, daß eine Hochwasserschutzanlage in mobiler Form über Straßen und Plätze geführt und an vorhandene Bauteile angeschlossen werden kann, ohne daß in hochwasserfreien Zeiten Behinderungen in Kauf genommen werden müssen. Die Absperreinrichtung läßt sich leicht und schnell montieren, insbesondere wenn ohne Sicht gearbeitet werden muß und in ihrer Höhe den Erfordernissen schrittweise anpassen. Auch bei einem niedrigen Wasserstand ist eine Dichtigkeit gewährleistet.

Die Erfindung wird in der nachfolgenden Beschreibung anhand von in den Zeichnungen dargestellten Ausführungsbeispielen näher erläutert.

Es zeigen,

| | |
|---|---|
| Fig. 1 | den bei der Absperreinrichtung verwendeten Absperrbalken in schaubildlicher Ansicht, |
| Fig. 2a bis 2c | mehrere derartige übereinandergesetzte Absperrbalken auf verschieden gestalteten Fundamenten in schaubildlicher Ansicht, |
| Fig. 3 | die Ausbildung eines Steckpfostens in Verbindung mit der Anordnung zweier angrenzender Absperrbalken in schaubildlicher Ansicht, |
| Fig. 4 | eine derartige Anordnung im Schnitt, |
| Fig. 5 | eine Draufsicht gemäß Fig. 4, |
| Fig. 6 | eine Draufsicht auf die Anordnung eines Anschlußprofils an Gebäuden oder Mauern, |
| Fig. 7 | eine Teilansicht einer derartigen Absperrmauer in schaubildlicher Ansicht gemäß einem weiteren Ausführungsbeispiel, |
| Fig. 8 | einen Querschnitt durch einen Absperrbalken gemäß einem weiteren Ausführungsbeispiel, |
| Fig. 9 | eine weitere Ausbildung eines Steckpfostens und seine Anordnung im Boden im |

Fig. 10    Längsschnitt,
einen Schnitt nach der Linie A -
A in Fig. 9 und

Fig. 11    die Ansicht eines Spannbolzens
zum Befestigen der
Absperrbalken und
Steckpfosten.

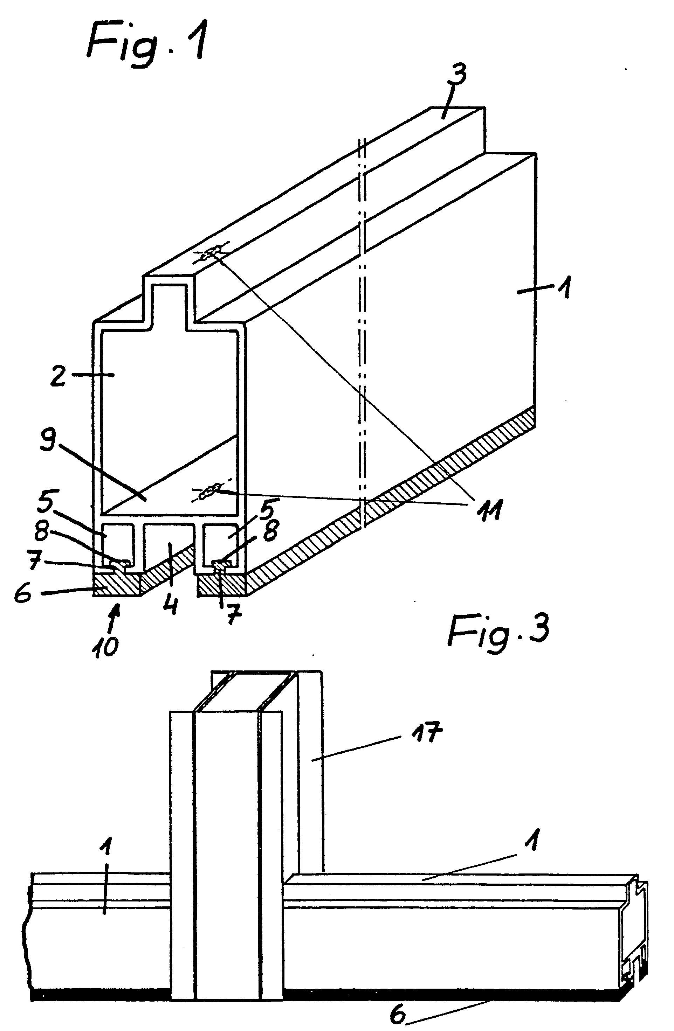

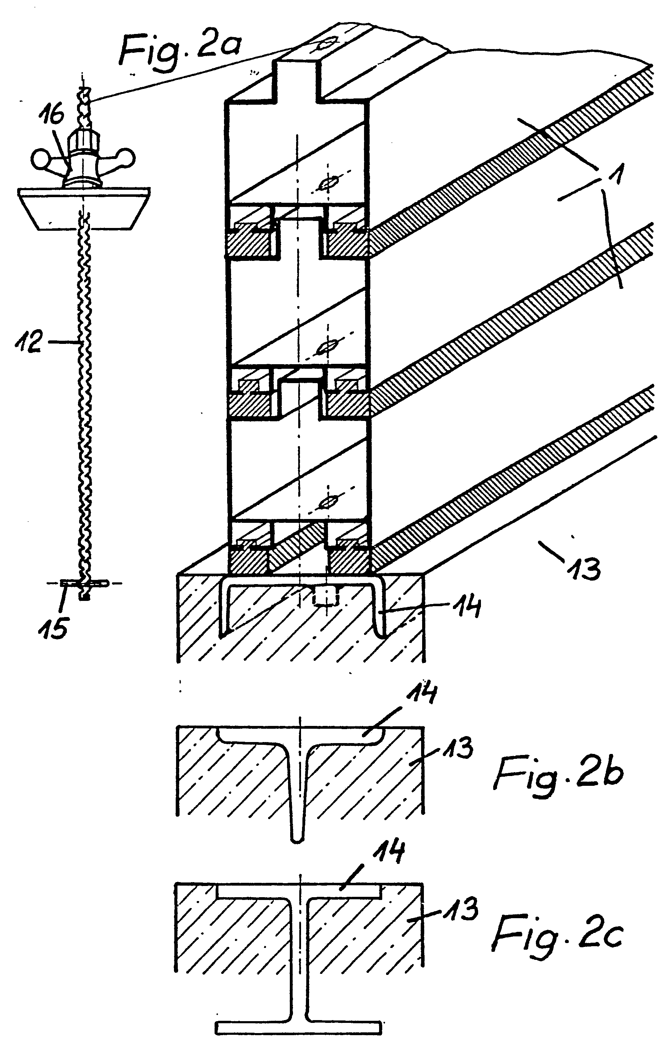

Der zur Bildung einer Absperrmauer vorgesehene Absperrbalken 1 ist in Fig. 1 gezeigt, wobei dieser Absperrbalken 1 vorzugsweise aus Aluminium besteht und als Hohlprofil ausgebildet ist. Der in der Mitte angeordnete Hohlraum 2 ist rechteckförmig, wobei beispielsweise an der oberen Seite ein Federelement 3 angeordnet ist, während an der Unterseite ein Nutprofil 4 vorgesehen ist. Bei diesem Nutprofil befinden sich seitlich zu der Nut 4 hohl ausgebildete rechteckförmige Seitenteile 5, an denen Dichtungsstreifen 6 gehalten sind. Dazu befinden sich an der Unterseite dieser Seitenteile 5 durchgehende Schlitze 7, wobei an der Oberseite des Dichtungsstreifens 6 Verbreiterungen 8 vorgesehen sind, die innerhalb des Hohlraumes der Seitenteile 5 liegen, so daß damit die Dichtungsstreifen an dem Balken 1 gehalten sind. Das Anordnen dieser Dichtungsstreifen 6, die aus einem weichen und alterungsbeständigen Material, wie beispielsweise Polyurethan, bestehen, erfolgt durch Einschieben in diese Schlitze 7. Weiterhin befinden sich sowohl an der Oberseite der Feder 3 als auch dem Boden 9 an der Nutseite 10 Durchstecköffnungen 11, um die einzelnen Balken 1 mit Hilfe von durchgesteckten Spannbolzen 12 gegeneinander zu verspannen (Fig. 2).

Die Anordnung mehrerer übereinander liegender Absperrbalken 1 zu einer vertikalen Absperrmauer ergibt sich aus Fig. 2, wobei entsprechend der gewünschten Schutzlinie ein Fundament 13 vorgesehen wird. In dieses Fundament ist gemäß Fig. 2a eine U-förmige Stahlschiene 14 einbetoniert, wobei gemäß Fig. 2b diese Schiene 14 ein T-Profil und gemäß Fig. 2c ein I-Profil aufweist. In diesen Schienen 14 sind in bestimmten Abständen Bajonettöffnungen vorgesehen, so daß ein Verspannen der einzelnen Balken 1 mit dem Fundament 13 möglich ist.

Die Spannbolzen 12 besitzen am unteren Ende einen Querstift 15 und oben auf dem Gewindestab eine Flügelmutter 16, wobei ggf. zur Begrenzung des Zusammendrückabstandes wegen der Dichtungen ein Anschlag für die Flügelmutter 16 vorgesehen ist.

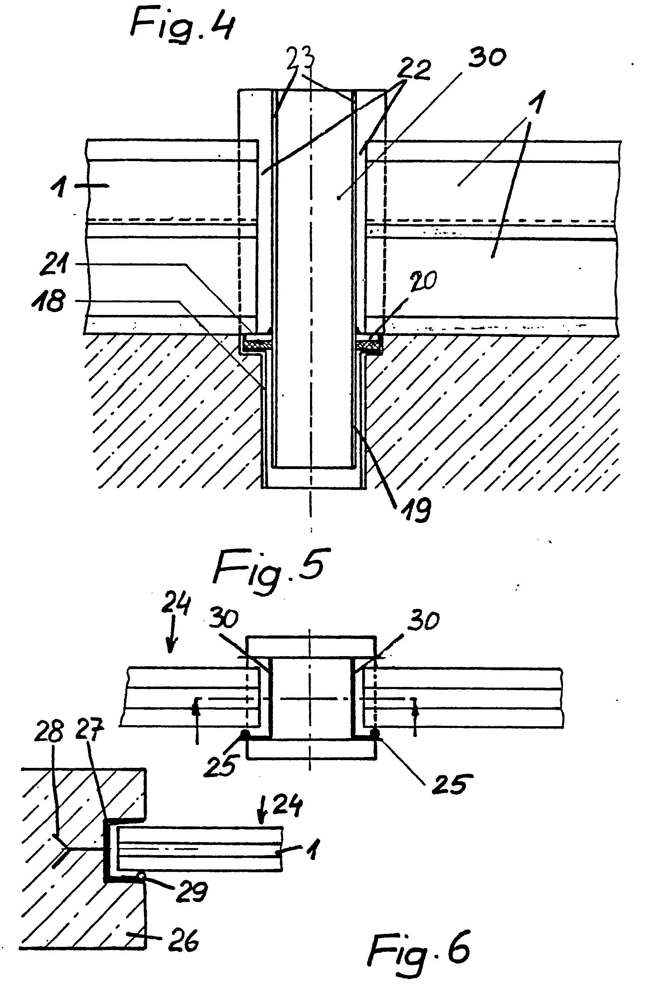

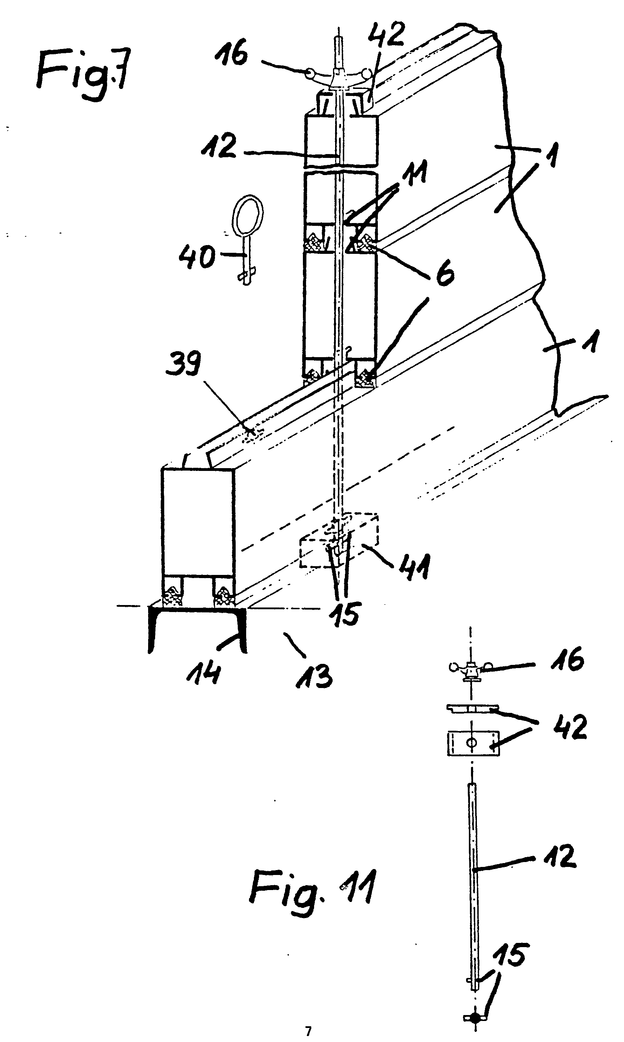

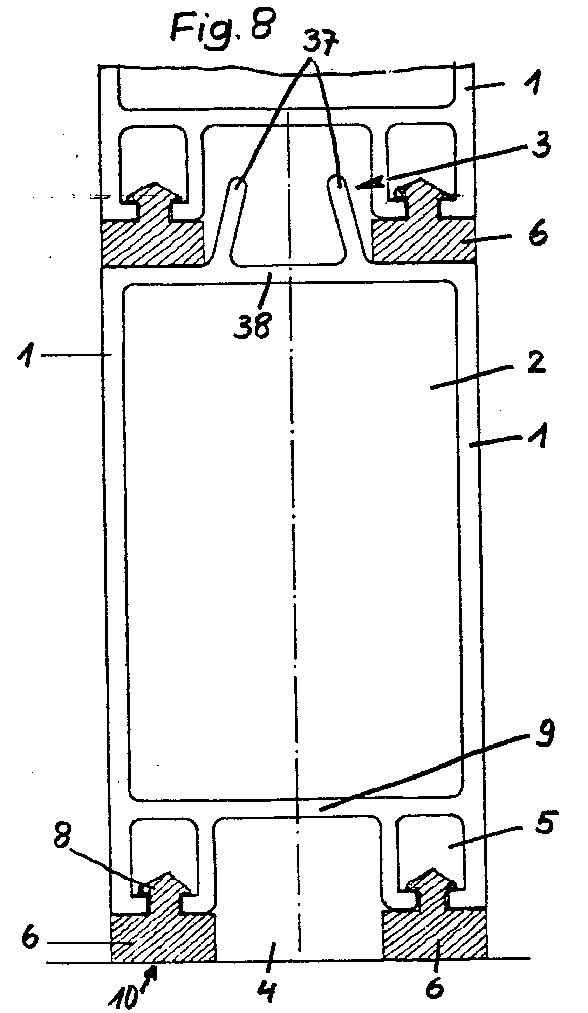

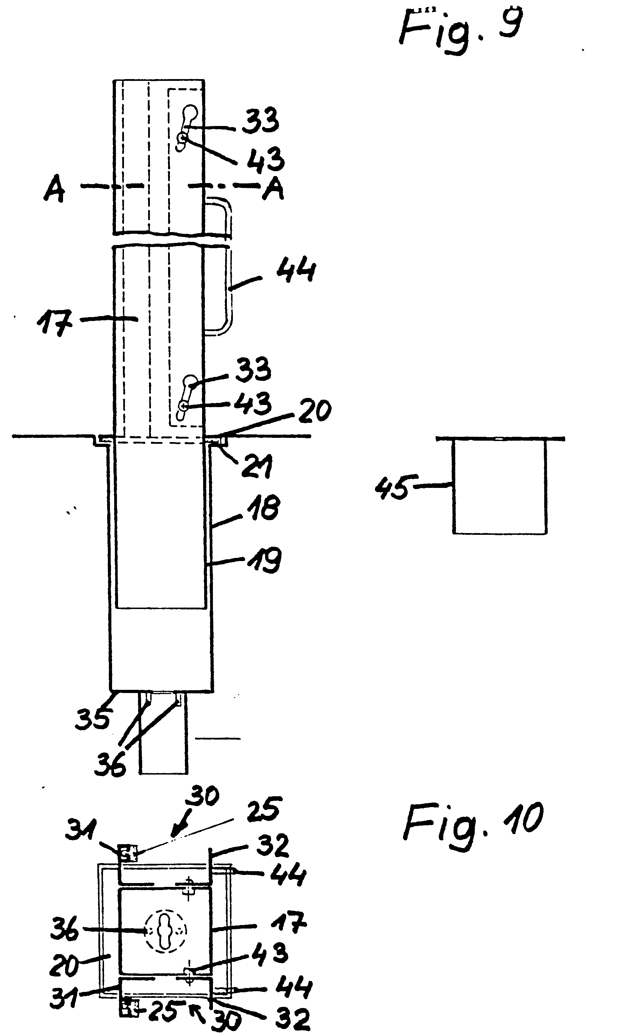

Die Fig. 3 zeigt den Anschluß zweier Balken 1 an einem Steckpfosten 17, der zu beiden Seiten eines mittleren Hohlprofils zur Aufnahme der Balken 1 ein U-Profil besitzt.

Für die Anordnung dieser Steckpfosten 17 im Fundament 13 dienen im Querschnitt rechteckförmige Köcher 18, in die die Steckpfosten 17 mit ihrem unteren Ende 19 angeordnet sind. Zur Abdichtung dieser Steckpfosten 17 besitzen diese an der Einstecköffnung des Köchers 18, d. h. im Bereich des Köcherrandes einen rundumlaufenden Winkel 20, an dem unten eine Dichtung 21 angebracht ist. Diese Dichtung 21 liegt am Köcherrand auf, so daß damit eine Dichtung gewährleistet ist. Die einzelnen Balken 1 werden dann in die seitliche Öffnung der Steckpfosten 17 eingeschoben, wobei ein Abstand 22 zur Wandung 23 des Pfostens 17 besteht und damit Wasser in das Hohlprofil des Balkens 1 laufen kann, wodurch ein Auftrieb der Balken 1 vermieden wird. Die Abdichtung gegenüber der Wasserseite 24 erfolgt durch eine an der gegenüberliegenden Seite im U-Profil vertikal verlaufende Dichtung 25, wobei die Balken 1 durch den Wasserdruck gegen diese Dichtung 25 gedrückt werden.

Die Fig. 6 zeigt einen Wandanschluß, wobei in der Wand 26 eine U-Profilschiene 57 mit Maueranker 28 angeordnet ist und hierbei ebenfalls eine entsprechend vertikal verlaufende Dichtung 29 gegenüberliegend zur Wasserdruckseite 24 vorgesehen ist.

Das Vorbereiten und auch die Montage ist denkbar einfach, wobei zunächst nach Festlegung der Schutzlinie nach den statischen Erfordernissen die Fundamente 13 und Betongurte in den Boden eingebracht werden. Weiterhin werden in diese Fundamente die Köcher 18 eingesetzt, wobei diese in der hochwasserfreien Zeit mit einer verkehrssicheren, gegen Mißbrauch geschützten Abdeckung versehen sind. Im Bedarfsfall wird die Abdeckung entfernt und die Steckpfosten 17 werden in die Köcher 18 eingesetzt. Danach werden die einzelnen Absperrbalken 1 in das Profil der Pfosten 17 eingeschoben und mit Hilfe der Spannbolzen 12 auf den Untergrund angepreßt.

Bei der in Fig. 7 dargestellten Absperrmauer sind drei Absperrbalken 1 übereinander angeordnet, wobei die beiden oberen Absperrbalken 1 der Übersicht halber verkürzt dargestellt sind. Der Bodenanschluß erfolgt über die im Fundament 13 eingelassene U-förmige Profilschiene 14, mit der die Absperrbalken 1 mit Hilfe eines Spannbolzens 12 verspannt sind. Der Spannbolzen 12 wird unterhalb der Stahlschiene 14 an einer Halterung 41 festgehalten. Der Spannbolzen 12 wird mit Hilfe einer Flügelmutter 16 sowie Stützscheibe 42 festgespannt (Fig. 11).

Der Absperrbalken 1 gemäß Gigur 8 besteht aus einem rechteckförmigen Hohlprofil, wobei die aufeinandergesetzten Balken zu beiden Seiten eine glatte vertikale Wand ergeben. An der Oberseite befindet sich ein Federlement 3, das aus zwei schräg zur Mitte hin hochstehenden Führungsschienen 37 besteht, wobei im Boden 38, d. h. im Bereich des Federelementes 3 seitlich außen am Balken 1 jeweils Montageöffnungen 39 (Fig. 7) vorgesehen sind. Auf einem solchen Absperrbalken sitzt dann der nächste mit den Dichtungsstreifen 6 unmittelbar auf. Mit Hilfe eines Hebewerkzeuges 40 lassen sich die einzelnen Balken auf dem nächsten Balken bzw. dem Boden aufsetzen, wobei wegen der besonderen Ausbildung des Federelementes die jeweilige Montageöffnung auch ohne Sicht gefunden werden kann.

Der Anschluß der einzelnen Balken erfolgt an den Steckpfosten 17 (Figuren 9 und 10). Zum Einsetzen der Steckpfosten 17 dienen die im Boden eingelassenen Köcher 18, die einen Köcherfuß 35 besitzen, an dem Arretierbolzen 36 angebracht sind. Mit Hilfe des Spannstabes 12 werden die Steckpfosten 17 im Köcher 10 verankert.

Zur Bildung der U-förmigen Öffnungen 30 sind zu beiden Seiten des Steckpfostens 17 Winkel 31 bzw. 32 befestigt. Gegenüber der Wasserdruckseite befindet sich der Winkel 31 als fester Winkel und besitzt außen eine vertikal verlaufende Dichtung 25, während der gegenüberliegende Winkel 32 als beweglicher Andruckwinkel ausgebildet ist, indem am Steckpfosten 17 schräg nach unten zur Dichtung 25 hin verlaufende Führungen 33 ausgebildet sind, in denen am Winkel 32 befestigte Bolzen 43 geführt sind. Zur besseren Handhabung der Andruckwinkel dienen seitliche Griffe 44. Um die durch den Köcher 18 gebildete Öffnung nach einer Demontage der Absperreinrichtung zu verschließen, dienen entsprechende Verschlußkappen 45.

## Patentansprüche

1. Absperreinrichtung für den Hochwasserschutz und zur Abdichtung von Kanälen mit als Hohlprofil ausgebildeten Absperrbalken (1), die an den Berührungsflächen eine Nut-Feder-Verbindung (3, 4) aufweisen und wobei die übereinander angeordneten Balken gegeneinander mit Hilfe von Spannbolzen (12) verspannt und abgedichtet sind, dadurch gekennzeichnet, daß die hohl ausgebildeten Seitenteile (5) auf der Nutseite (10) an ihrer Anschlußseite einen durchgehenden Schlitz (7) aufweisen, in den jeweils ein Dichtungsstreifen (6) eingeschoben ist, und daß zum Verbinden der übereinander angeordneten Balken (1) am Fundament (13) abgedichtete Steckpfosten (17) vorgesehen sind, die vertikal eine U-förmige Öffnung (30) aufweisen, in die die Balken (1) eingeschoben sind, wobei innerhalb der Öffnung (30) gegenüber der Wasserdruckseite (24) vertikal verlaufende Dichtungsbänder (55) vorgesehen sind.

2. Einrichtung nach Anspruch 1, dadurch gekennzeichnet, daß die Steckpfosten (17) in einem Köcher (18) angeordnet sind und mit einem befestigten Winkei (20) am Köcherrand aufsitzen, wobei zwischen dem Winkel (20) und dem Köcherrand ein Dichtungsband (21) angebracht ist.

3. Einrichtung nach Anspruch 1 und 2, dadurch gekennzeichnet, daß Anschlußprofile (27) für Gebäude oder Mauern (26) vorgesehen sind, die mit Dichtungsbändern (29) versehen sind.

4. Absperreinrichtung nach Anspruch 1 bis 3, dadurch gekennzeichnet, daß die U-förmige Öffnung (30) am Steckpfosten (17) durch einen daran angebrachten festen Winkel (31) und einen beweglichen Andruckwinkel (32) gebildet ist, wobei der Andruckwinkel (32) in einer schräg nach unten gegen die Dichtung (25) laufenden Führung (33) gehaltert ist.

5. Absperreinrichtung nach Anspruch 1 bis 4, dadurch gekennzeichnet, daß der Steckpfosten (17) mit Hilfe eines Spannbolzens (12) am Köcher (18) befestigt ist.

6. Absperreinrichtung nach Anspruch 1 bis 5, dadurch gekennzeichnet, daß am Köcherfuß (35) Arretierbolzen (36) für den Spannbolzen (12) vorgesehen sind.

7. Absperreinrichtung nach Anspruch 1 bis 6, dadurch gekennzeichnet, daß das Federelement (3) zwei seitliche Führungsschienen (37) aufweist, wobei im Bodenteil (38) Montageöffnungen (39) für ein Hebewerkzeug (40) vorgesehen sind.

8. Absperreinrichtung nach Anspruch 1 bis 7, dadurch gekennzeichnet, daß in einer Bodenschiene (14) im Fundament (13) Halterungen (41) für das Ende des Spannbolzens (12) vorgesehen sind.

## Claims

1. Shutoff device for flood protection and for sealing channels with shutoff beams (1) of hollow section design which have a groove-spring union (34) on the contact faces and whereby the beams which are disposed one on top of the other are braced and sealed in relation to each other with the aid of clamping bolts (12), characterised in that the side parts (5) which are of hollow design have on the groove side (10) a through slot (7) on their connecting side, into which a sealing strip (6) is inserted, and in that for connecting the beams (1) arranged one on top of the other, plug-in-posts (17) sealed at the foundation (13) are provided, which have vertically a U-shaped opening (30) into which the beams (1) are inserted, whereby inside the opening (30) sealing bands (25) are provided running vertically compared with the water pressure side (24).

2. Device as claimed in claim 1, characterised in that the plug-in posts (17) are arranged in a holder (18) and rest on the edge of the holder with a fixed angle (20), whereby a sealing band (21) is fitted between the angle (20) and the edge of the holder.

3. Device as claimed in claims 1 and 2, characterised in that connecting profiles (27) for buildings or walls (26) are provided which are fitted with sealing bands (29).

4. Shutoff device as claimed in claims 1 to 3, characterised in that the U-shaped opening (30) on the plug-in post (17) is formed by a fixed angle (31) mounted on it, and a movable pressure angle piece (32) whereby the pressure angle piece (32) is mounted in guide (33) which runs diagonally downwards towards the seal (25).

5. Shutoff device as claimed in claims 1 to 4, characterised in that the plug-in post (17) is secured with the aid of a clamping bolt (12) on the holder (18).

6. Shutoff device as claimed in claims 1 to 5, characterised in that check bolts (36) for the clamping bolts (12) are provided on the foot (35) of the holder.

7. Shutoff device as claimed in claims 1 to 6, characterised in that the spring element (3) has two lateral guide rails (37), whereby mounting openings (39) for a lifting appliance (40) are provided in the bottom part (38).

8. Shutoff device as claimed in claims 1 to 7, characterised in that mounting supports (41) for the end of the clamping bolt (12) are provided in a floor rail (14) in the foundation (13).

**Revendications**

1. Dispositif d'arrêt pour la protection contre les crues et pour rendre les canaux étanches, comportant des poutres d'arrêt (1) réalisées sous forme de profilés creux, qui comportent sur les surfaces de contact une liaison par languette et rainure (3, 4), les poutres placées l'une sur l'autre étant serrées l'une contre l'autre à l'aide de tirants filetés de serrage (12) et rendues étanches, caractérisé en ce que les parties latérales (5) creuses comportent du côté rainure (10), sur leur côté de raccordement, une fente continue (7) dans laquelle est chaque fois introduite une bande d'étanchéité (6) et en ce qu'on prévoit, pour relier les poutres (1) placées l'une sur l'autre, des poteaux enfichés (17) de façon étanche dans la fondation (13) et comportant verticalement une ouverture (30) en forme de U, ouvertures dans lesquelles sont introduites les poutres (1), des bandes d'étanchéité (25) s'étendant verticalement face au côté de la pression d'eau (24).

2. Dispositif selon la revendication 1, caractérisé en ce que les poteaux enfichés (17) sont disposés dans un carquois (18) et s'appuient par une cornière qui leur est fixée (20) sur le bord du carquois, une bande d'étanchéité (21) étant placée entre la cornière (20) et le bord du carquois (21).

3. Dispositif selon les revendications 1 et 2, caractérise en ce qu'on prévoit des profilés de raccordement (27) pour des bâtiments ou des murs (26) lesquels profilés sont munis de bandes d'étanchéité (29).

4. Dispositif d'arrêt selon les revendications 1 à 3, caractérisé en ce que l'ouverture en forme de U (30) sur le poteau enfiché (17) est constituée par une cornière fixe (31) placée sur celui-ci et par une cornière de pression mobile (32), la cornière de pression (32) étant maintenue dans un guidage (33) s'étendant vers le bas en oblique contre le joint d'étanchéité (25).

5. Dispositif d'arrêt selon les revendications 1 à 4, caractérisé en ce que le poteau enfiché (17) est fixé sur le carquois (18) à l'aide d'un tirant fileté de serrage (12).

6. Dispositif selon les revendications 1 à 5, caractérisé en ce qu'on prévoit au pied (35) du carquois des goujons de blocage (36) pour le tirant de serrage (12).

7. Dispositif d'arrêt selon les revendications 1 à 6, caractérisé en ce que l'élément à ressort (3) comporte deux rails de guidage latéraux (37), des ouvertures de montage (39) pour un outil de levage (40) étant prévues dans la partie fond (38).

8. Dispositif d'arrêt selon les revendications 1 à 7, caractérisé en ce qu'on prévoit dans un rail de fond (14) placé dans la fondation (13) des fixations (41) pour l'extrémité du tirant de serrage (12).

Fig.1

Fig.3

0 163 292

Fig. 2a

16

12

15

14

1

13

14

13

Fig. 2b

14

13

Fig. 2c

3

Fig.4

Fig.5

Fig.6

Fig.7

Fig. 11

0 163 292

Fig. 8

Fig. 9

33
43

A — · — · — A

44

17

33
43
20

21

18

19

45

35
36

30
31
25
32
44

36
17
20
43
31
44
25
30
32

Fig. 10